# FASCICULE DE BREVET EUROPEEN

(11) **EP 0 715 394 B1**
(45) Date de publication et mention de la délivrance du brevet: **05.11.1997**
(21) Numéro de dépôt: 95118763.2
(22) Date de dépôt: 29.11.1995
(51) Int. Cl.: H02K 1/18, H02K 5/15

(54) **Machine électrique tournante, et notamment alternateur de véhicule automobile, comportant des moyens perfectionnés de montage élastique du stator**
Rotierende elektrische Maschine, insbesondere Automobil-Fahrzeug-Generator mit verbesserter elastischer Montage des Stators
Electrical rotation machine, in particular for automobile vehicle alternator comprising improved means for elastic mounting of a stator

(30) Priorité: 02.12.1994 FR 9414617
(43) Date de publication de la demande: 05.06.1996
(73) Titulaire: VALEO EQUIPEMENTS ELECTRIQUES MOTEUR, 94000 Créteil (FR)
(72) Inventeur: Cazal, Christian, F-91280 St. Pierre du Perray (FR); Gruson, Michel, F-94370 Sucy en Brie (FR)
(74) Mandataire: Gamonal, Didier

(56) Documents cités:
- EP-A- 0 240 644
- DE-A- 3 704 157
- GB-A- 2 059 177
- PATENT ABSTRACTS OF JAPAN vol. 11 no. 110 (E-496) [2557] ,7 Avril 1987 & JP-A-61 258635 (NIPPON DENSO CO LTD) 17 Novembre 1986,

## Description

La présente invention concerne une machine électrique tournante.

L'invention concerne notamment un alternateur utilisé pour l'alimentation en énergie du circuit électrique d'un véhicule automobile.

L'invention concerne une machine électrique tournante selon le préambule de la revendication 1, du type comportant un stator de forme générale annulaire cylindrique, qui est constitué par un empilage de tôles découpées, qui est agencé dans un carter en deux parties généralement réalisées par moulage, reliées entre elles selon un plan de joint perpendiculaire à l'axe du stator, et du type dans lequel le stator est monté serré axialement entre des surfaces radiales de portée opposées formées dans chacune des deux parties du carter, avec interposition d'au moins un élément déformable élastiquement comprimé axialement entre l'une des deux surfaces de portée et une portion de la face radiale annulaire d'extrémité en vis-à-vis du stator.

Selon une première conception connue, l'élément déformable élastiquement est un joint annulaire d'extrémité à section en L qui est monté sur le bord radial externe d'une des extrémités axiales du stator.

Le serrage axial du stator est assuré par une série de pattes rapportées, par exemple au nombre de trois ou quatre, qui sont fixées par des vis dans la partie du carter dans lequel a été préalablement centré le stator avec son joint annulaire compressible axialement.

Cette solution est peu satisfaisante dans la mesure où elle nécessite d'assurer un montage et un serrage axial préalables du stator dans une première partie du carter puis un assemblage des deux parties du carter par un autre jeu de vis de serrage.

Dans le document EP-A1-0 240 644, il a également été proposé d'agencer un joint compressible annulaire en L à chacune des deux extrémités axiales du stator, chacun des joints étant reçu dans l'une des deux parties du carter.

Cette solution est également peu satisfaisante dans la mesure où elle nécessite d'assurer des usinages concentriques dans chacune des deux parties du carter de manière que la position finale du stator dans les deux joints soit correctement centrée par rapport aux deux parties du carter qui constituent également les paliers pour le rotor de la machine tournante.

De plus, les opérations de montage qui nécessitent de mettre en place un premier joint dans une partie du carter, le stator en appui contre le premier joint, puis le second joint et enfin de fermer l'ensemble par la seconde partie du carter sont également particulièrement complexes à assurer en aveugle.

Le document EP-A1-0 240 644 illustre également une variante de réalisation où les deux joints annulaires à section en L sont reliés par des tampons cylindriques longitudinaux : les difficultés rencontrées dans les opérations de montage sont identiques à celles déjà décrites ; en effet les tampons cylindriques longitudinaux nuisent à un positionnement relatif correct et à un bon serrage axial dans la mesure où ils s'opposent à la répartition des efforts, lesdits tampons cylindriques formant une série d'entretoises entre les joints annulaires.

La présente invention a pour but de proposer une nouvelle conception qui permet de remédier aux inconvénients qui viennent d'être évoqués.

Dans ce but, l'invention propose une machine électrique tournante du type mentionné précédemment, caractérisée en ce qu'elle comporte une série de tampons déformables élastiquement répartis angulairement et dont chacun est comprimé axialement entre la face radiale annulaire d'extrémité du stator et une portion de surface de portée formée dans la partie correspondante du carter.

Selon d'autres caractéristiques de l'invention :
- le tampon est un bloc en matériau déformable élastiquement comportant deux faces parallèles et opposées qui prennent appui contre la face radiale annulaire d'extrémité du stator et contre une portion de surface de portée respectivement ;
- le bloc tampon comporte une patte de positionnement qui est reçue dans un logement formé dans ladite partie du carter ;
- la patte de positionnement s'étend axialement au-delà de l'une des faces parallèles d'appui du bloc tampon;
- la patte de positionnement comporte un évidement pour le passage du corps d'une vis de serrage axial des deux parties du carter ;
- le bloc tampon comporte deux pattes de positionnement agencées symétriquement et dont chacune s'étend axialement au-delà de l'une des deux faces parallèles d'appui du bloc tampon ;
- l'une des deux pattes de positionnement est reçue dans un logement formé dans ladite partie du carter et l'autre deux pattes de positionnement, avant le serrage axial des deux parties du carter, fait saillie axialement au-delà de la face annulaire d'extrémité ouverte de ladite partie du carter qui délimite ledit plan de joint ;
- il est prévu un joint annulaire de centrage du stator qui est monté serré axialement entre une surface annulaire de portée formée dans l'autre partie du carter et l'autre face radiale annulaire d'extrémité du stator.

D'autres caractéristiques et avantages de l'invention apparaîtront à la lecture de la description détaillée qui va suivre pour la compréhension de laquelle on se reportera aux dessins annexés dans lesquels :
- La figure 1 est une demi-vue en coupe axiale d'un exemple de réalisation d'un alternateur dont le stator est monté dans le carter conformément aux enseignements de l'état de la technique ;
- la figure 2 est une vue en section axiale partielle d'un alternateur dont le stator est monté dans le carter conformément aux enseignements de l'invention, les deux parties du carter étant illustrées avant le serrage axial ;
- la figure 3 est une demi-vue en section axiale partielle, correspondant à la partie inférieure de la figure 2, qui illustre les deux parties du carter en position serrée ;
- la figure 4 est une vue en perspective à plus grande échelle d'un des blocs tampon utilisé pour le montage élastique du stator conformément aux enseignements de l'invention ; et
- la figure 5 est une vue partielle et à plus grande échelle selon la flèche F5 de la figure 2 qui illustre la partie du carter qui reçoit les tampons élastiques.

Dans la description qui va suivre, des composants identiques ou similaires illustrés sur les différentes figures seront désignés par les mêmes chiffres de référence.

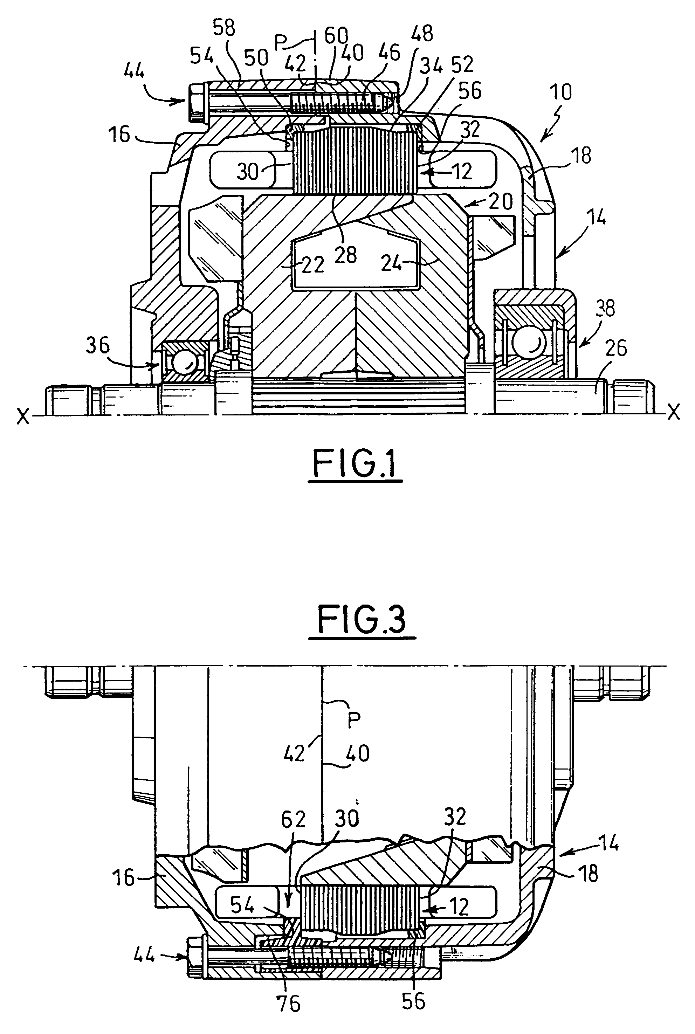

On a représenté à la figure 1 un alternateur de véhicule automobile 10 qui est constitué pour l'essentiel par un stator 12 monté dans un carter 14 en deux parties 16 et 18, et d'un rotor 20.

Le rotor 20 est constitué notamment d'une série de roues polaires 22 et 24 qui sont liées en rotation à l'arbre tournant 26 du rotor 20.

Le rotor 20 est monté tournant à l'intérieur d'une enceinte cylindrique annulaire 28 délimitée à l'intérieur du stator 12.

Le stator 12 est constitué par un empilage de tôles et il présente une forme générale cylindrique annulaire délimitée par deux surfaces radiales annulaires d'extrémité 30 et 32 et par une surface cylindrique externe 34.

Les deux parties 16 et 18 de l'enveloppe ou carter 14 qui reçoit le stator 12 sont deux pièces moulées et usinées dont chacune reçoit un palier 36, 38 pour le montage à rotation de l'arbre 26 du rotor 20.

Les deux parties 16 et 18 du carter 14 comportent chacune une face radiale annulaire d'extrémité usinée 40, 42 qui délimitent un plan de joint P des deux parties du carter selon lequel elles sont serrées axialement au moyen d'une série de quatre vis de serrage 44 réparties angulairement de manière régulière autour de l'axe X-X de l'alternateur.

L'extrémité filetée 46 de chacune des vis est montée vissée dans un trou taraudé correspondant 48 formé dans la partie 18 du carter.

Dans l'agencement selon l'état de la technique illustré sur la figure 1, le stator 12 est suspendu élastiquement à l'intérieur du carter 14 en deux parties 16 et 18 au moyen de deux joints annulaires de centrage à section en L 50 et 52.

Chacun des joints 50, 52 est réalisé en matériau compressible axialement, par exemple en élastomère ou en caoutchouc, et il est interposé entre l'une des faces radiales annulaires d'extrémité 30, 32 du stator 12 et une surface radiale annulaire de portée 54, 56 formée en vis-à-vis dans la portion en forme de jupe cylindrique 58, 60 de la partie correspondante 16, 18 du carter 14.

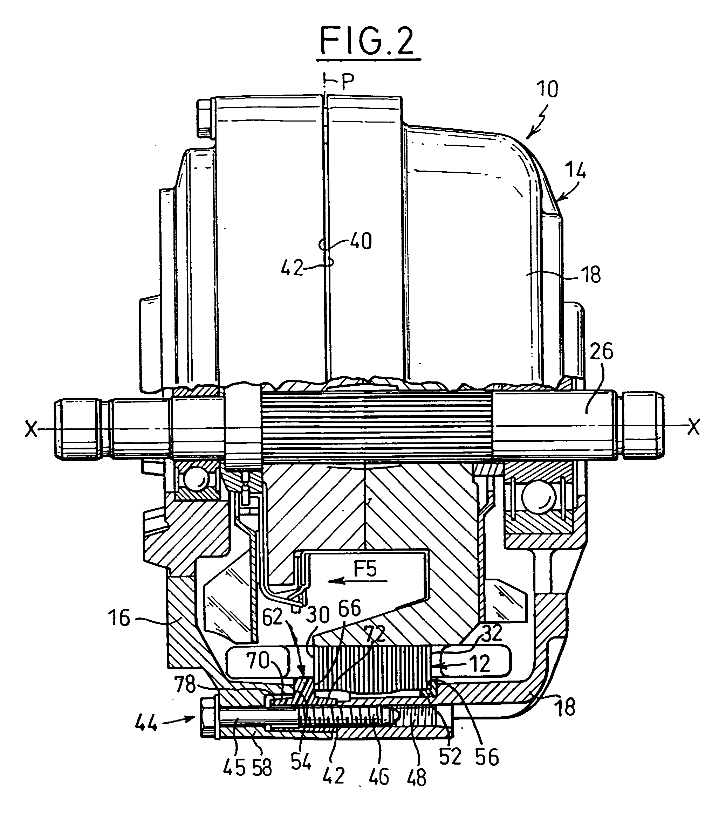

On décrira maintenant la conception selon l'invention dont un mode de réalisation est illustré aux figures 2 à 5.

Comme on peut le voir sur la figure 2, l'un des deux joints annulaires élastiques 50 est remplacé par une série de tampons élastiques 62 en forme de blocs qui sont au nombre de quatre et qui sont répartis angulairement de manière régulière autour de l'axe X-X au droit des vis 44.

Chaque tampon en forme de bloc 62 est un bloc de forme générale parallélépipédique rectangle qui délimite deux faces parallèles et opposées d'appui 64 et 66 dont chacune prend respectivement appui contre une portion en vis-à-vis de la face radiale annulaire d'extrémité 30 du stator 12 et contre une surface radiale annulaire de portée 54 usinée dans la moitié 16 du carter 14.

Chaque tampon 62 en forme de bloc rectangulaire se prolonge latéralement par une partie de positionnement 68 qui est constituée pour l'essentiel par deux pattes de positionnement 70,72 opposées qui s'étendent axialement de part et d'autre au-delà des faces d'appui 64 et 66 du bloc 62.

Les deux pattes de positionnement 70 et 72 sont réalisées venues de matière en une seule pièce et elles sont toutes les deux évidées centralement pour délimiter un évidement de forme semi-cylindrique 74 qui est prévu pour permettre le passage du corps 45 d'une vis de serrage axiale correspondante 44.

Les dimensions axiales des deux pattes de positionnement 70 et 72 sont égales de manière que l'ensemble du bloc formant tampon 62 présente une conception symétrique qui permet son montage indifférent dans l'une ou l'autre des deux positions dans un logement de forme complémentaire 76, c'est-à-dire un logement de forme sensiblement parallélépipédique formé dans la portion correspondante 58 de la partie 16 du carter 14.

Les dimensions des pattes de positionnement 70 et 72 sont également telles que celle qui est reçue dans le logement 76 ne viennent pas buter contre le fond axial 78 de ce dernier tandis que la face d'extrémité 80 de la patte de positionnement 72 qui est tournée vers l'autre partie 18 du carter 14 est axialement en appui contre la face annulaire d'extrémité usinée 42 de cette dernière avant l'opération de serrage et comme cela est illustré sur la figure 2.

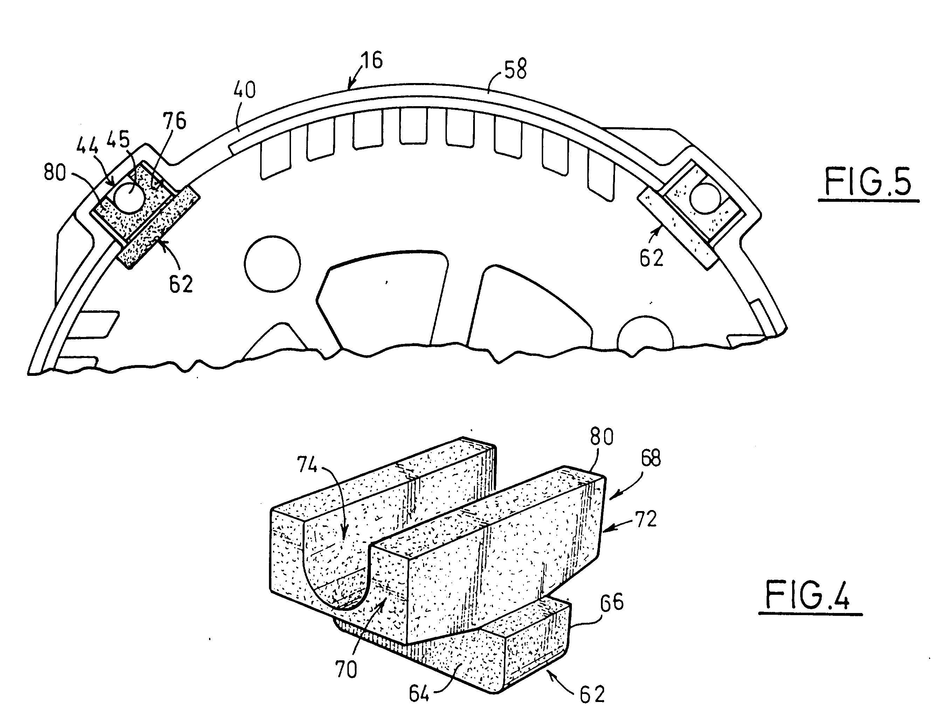

Après serrage, et comme cela est illustré sur la figure 3, les tampons 62 sont comprimés axialement entre les surfaces 30 et 54, les surfaces annulaires d'extrémité 40 et 42 étant serrées en contact selon le plan de joint P.

L'assemblage des différents composants de l'alternateur illustré aux figures 2 et 3 s'effectue de la manière suivante.

Le joint annulaire 52 est mis en place dans la partie 18 du carter. La face ouverte de cette dernière étant de préférence orientée vers le haut.

On met ensuite en place le stator 12 dans la partie 18 avec sa face radiale annulaire d'extrémité 32 en appui dans le joint 52.

Par ailleurs, les quatre tampons 62 sont mis en place dans les logements correspondants 76 de l'autre partie 16 du carter.

A cet effet, il est possible de prévoir que les dimensions transversales des pattes de positionnement 70 soient légèrement supérieures à la largeur de chaque logement 76 afin d'assurer un maintien en position de la patte 70 dans le logement 76 par une légère compression du matériau constitutif de la patte 70.

On met ensuite en place la partie 16 du carter 14 sur la partie 18 avec les faces d'appui 66 des blocs 62 en contact contre la face radiale annulaire d'extrémité 30 du stator 12.

La caractéristique selon laquelle les faces axiales d'extrémité 80 des pattes 72 viennent en contact contre la face annulaire d'extrémité 42 de la partie permet un positionnement doux et sans choc préalable des deux parties, l'alignement angulaire étant assuré par mise en place des quatre vis 44 qui traversent le logement 74 formé dans les tampons 62 et dont les parties filetées 46 sont ensuite vissées dans les trous 48.

L'assemblage est ainsi particulièrement aisé, le centrage du stator étant assuré par le joint 52 et son immobilisation axiale "élastique" est assurée par les tampons 62.

La conception selon l'invention permet un montage "en aveugle".

On constate également qu'il suffit de faire appel aux quatre vis d'assemblage des deux parties du carter à l'exception de toute autre patte complémentaire et vis supplémentaire pour le positionnement et l'immobilisation axiale du stator.

Le fait que les pattes 72 dépassent axialement avant le serrage permet également de vérifier la présence des tampons à travers l'espace axial séparant les faces radiales annulaires d'extrémité 40 et 42 deux parties 16 et 18 du carter 14.

## Revendications

1. Machine électrique tournante (10) du type comportant un stator (12) de forme générale annulaire cylindrique qui est agencé dans un carter (14) en deux parties (16, 18) reliées entre elles selon un plan de joint (P) perpendiculaire à l'axe (X-X) du rotor de la machine, et du type dans lequel le stator (12) est monté serré axialement entre les surfaces radiales de portées opposées (54, 56) formées dans chacune des deux parties (16, 18) du carter (14), avec interposition d'au moins un élément déformable élastiquement (62, 52) comprimé axialement entre l'une (56, 54) des deux surfaces de portée et une portion de la face radiale annulaire d'extrémité en vis-à-vis (32, 30) du stator (12), caractérisée en ce qu'elle comporte une série de tampons (62) déformables élastiquement répartis angulairement et dont chacun est comprimé axialement entre la face radiale annulaire d'extrémité du stator (30) et une portion de surface de portée (54) formée dans la partie correspondante (16) du carter (14).

2. Machine électrique tournante selon la revendication 1, caractérisée en ce que le tampon (62) est un bloc en matériau déformable élastiquement comportant deux faces parallèles et opposées (66, 64) qui prennent appui contre la face radiale annulaire d'extrémité (30) du stator et contre une portion de surface de portée (54) respectivement.

3. Machine électrique tournante selon la revendication 2, caractérisée en ce que le bloc tampon (62) comporte une patte de positionnement (70) qui est reçue avec jeu dans un logement (76) formé dans ladite partie (16) du carter (14).

4. Machine électrique tournante selon la revendication 3, caractérisée en ce que la patte de positionnement (70) s'étend axialement au-delà de l'une des faces parallèles d'appui (64) du bloc tampon (62).

5. Machine électrique tournante selon la revendication 4, caractérisée en ce que la patte de positionnement (70) comporte un évidement (74) pour le passage du corps (45) d'une vis (44) de serrage axial des deux parties (16, 18) du carter (14).

6. Machine électrique tournante selon l'une des revendications 4 ou 5, caractérisée en ce que le bloc tampon (62) comporte deux pattes de positionnement (70, 72) agencées symétriquement et dont chacune s'étend axialement au-delà de l'une des deux faces parallèles (64, 66) d'appui du bloc tampon (62).

7. Machine électrique tournante selon la revendication 6, caractérisée en ce que l'une des deux pattes de positionnement (70) est reçue avec jeu dans un logement (76) formé dans ladite partie (16) du carter (14) et en ce que l'autre (72) des deux pattes de positionnement, avant le serrage axial des deux parties (16, 18) du carter (14), fait saillie axialement au-delà de la face radiale annulaire d'extrémité ouverte (40) de ladite partie du carter (16) qui délimite ledit plan de joint (P).

8. Machine électrique tournante selon l'une quelconque des revendications précédentes, caractérisée en ce qu'il est prévu un joint annulaire (52) de centrage du stator qui est monté serré axialement entre une surface annulaire de portée (56) formée dans l'autre partie (18) du carter (14) et l'autre face radiale annulaire d'extrémité (32) du stator (12).

9. Alternateur, notamment pour un véhicule automobile, caractérisé en ce qu'il est réalisé conformément à l'une quelconque des revendications précédentes.

## Patentansprüche

1. Rotierende elektrische Maschine (10), umfassend einen allgemein zylindrischen ringförmigen Stator (12), der in einem Gehäuse (14) aus zwei Teilen (16, 18) angeordnet ist, die entlang einer senkrecht zur Achse (X-X) des Rotors der Maschine verlaufenden Verbindungsebene (P) miteinander verbunden sind, wobei der Stator (12) axial zwischen den gegenüberliegenden radialen Lagerflächen (54, 56) eingespannt ist, die in jedem der beiden Teile (16, 18) des Gehäuses (14) ausgebildet sind, unter Einfügung mindestens eines elastisch verformbaren Elements (62, 52), das axial zwischen einer (56, 54) der beiden Lagerflächen und einem Teilstück der gegenüberliegenden ringförmigen radialen Abschlußfläche (32, 30) des Stators (12) zusammengedrückt ist , **dadurch gekennzeichnet,** daß sie eine Reihe von elastisch verformbaren Puffern (62) umfaßt, die winklig verteilt sind und die jeweils axial zwischen der ringförmigen radialen Abschlußfläche des Stators (30) und einer Lagerteilfläche (54) zusammengedrückt sind, die in dem entsprechenden Teil (16) des Gehäuses (14) ausgebildet ist.

2. Rotierende elektrische Maschine nach Anspruch 1, **dadurch gekennzeichnet,** daß der Puffer (62) ein Block aus elastisch verformbarem Material mit zwei parallelen und gegenüberliegenden Flächen (66, 64) ist, die an der ringförmigen radialen Abschlußfläche (30) des Stators bzw. an einer Lagerteilfläche (54) zur Anlage kommen.

3. Rotierende elektrische Maschine nach Anspruch 2, **dadurch gekennzeichnet,** daß der Pufferblock (62) einen Positionierungsansatz (70) umfaßt, der mit Spiel in eine in den besagten Teil (16) des Gehäuses (14) eingearbeitete Aufnahme (76) eingesetzt ist.

4. Rotierende elektrische Maschine nach Anspruch 3, **dadurch gekennzeichnet,** daß sich der Positionierungsansatz (70) axial hinter eine der parallelen Auflageflächen (64) des Pufferblocks (62) erstreckt.

5. Rotierende elektrische Maschine nach Anspruch 4, **dadurch gekennzeichnet,** daß der Positionierungsansatz (70) eine Aussparung (72) für den Durchgang des Körpers (45) einer Schraube (44) zur axialen Einspannung der beiden Teile (16, 18) des Gehäuses (14) enthält.

6. Rotierende elektrische Maschine nach einem der Ansprüche 4 oder 5 , **dadurch gekennzeichnet,** daß der Pufferblock (62) zwei Positionierungsansätze (70, 72) umfaßt, die symmetrisch angeordnet sind und die sich jeweils axial hinter eine der beiden parallelen Auflageflächen (64, 66) des Pufferblocks (62) erstrecken.

7. Rotierende elektrische Maschine nach Anspruch 6, **dadurch gekennzeichnet,** daß einer der beiden Positionierungsansätze (70) mit Spiel in eine in den besagten Teil (16) des Gehäuses (14) eingearbeitete Aufnahme (76) eingesetzt ist und daß der andere (72) der beiden Positionierungsansätze vor der axialen Einspannung der beiden Teile (16, 18) des Gehäuses (14) axial hinter der offenen ringförmigen radialen Abschlußfläche (40) des besagten Teils des Gehäuses (16) vorsteht, der die besagte Verbindungsebene (P) begrenzt.

8. Rotierende elektrische Maschine nach einem der vorgangehenden Ansprüche, **dadurch gekennzeichnet ,** daß ein Dichtungsring (52) zur Zentrierung des Stators vorgesehen ist, der axial zwischen einer im anderen Teil (18) des Gehäuses (14) ausgebildeten ringförmigen Lagerfläche (56) und der anderen ringförmigen radialen Abschlußfläche (32) des Stators (12) eingespannt ist.

9. Wechselstromgenerator, insbesondere für ein Kraftfahrzeug, **dadurch gekennzeichnet,** daß er nach einem der vorangehenden Ansprüche ausgeführt ist.

## Claims

1. A rotary electrical machine (10) of the type comprising a cylindrical, generally annular stator (12) which is arranged in a casing (14) consisting of two parts (16, 18) joined together in a junction plane (P) extending at right angles to the axis (X-X) of the rotor of the machine, and of the type in which the stator (12) is clamped axially between the opposed, radial support surfaces (54, 56) formed in each of the two parts (16, 18) of the casing (14), with at least one elastically deformable element (62, 52) being interposed and axially compressed between one (56, 54) of the two support surfaces and a portion of the radial and annular end face (32, 30) of the stator (12) in facing relationship therewith, characterised in that it includes a set of elastically deformable cushion members (62) spaced apart circumferentially, with each cushion member compressed axially between the radial and annular end face of the stator (30) and a support surface portion (54) formed in the corresponding part (16) of the casing (14).

2. A rotary electrical machine according to Claim 1, characterised in that the cushion member (62) is a block of elastically deformable material which has two opposed and parallel faces (66, 64) which bear, respectively, against the radial and annular end face (30) of the stator and against a support surface portion (54).

3. A rotary electrical machine according to Claim 2, characterised in that the cushion block (62) includes a locating lug (70) which is received with a clearance in a seating (76) formed in the said part (16) of the casing (14).

4. A rotary electrical machine according to Claim 3, characterised in that the locating lug (70) extends axially beyond one of the parallel engagement surfaces (64) of the cushion block (62).

5. A rotary electrical machine according to Claim 4, characterised in that the locating lug (70) has an aperture (74) for passage through it of the shank (45) of a screw (44) for axially fastening the two parts (16, 18) of the casing (14) together.

6. A rotary electrical machine according to Claim 4 or Claim 5, characterised in that the cushion block (62) includes two symmetrical locating lugs (70, 72), each of which extends axially beyond one of the two parallel engagement surfaces (64, 66) of the cushion block (62).

7. A rotary electrical machine according to Claim 6, characterised in that one of the two locating lugs (70) is received with a clearance in a seating (76) formed in the said part (16) of the casing (14), and in that the other one (72) of the two locating lugs, prior to the axial fastening together of the two parts (16, 18) of the casing (14), projects axially beyond the open radial and annular end face (40) of the said part (16) of the casing which defines the said junction plane (P).

8. A rotary electrical machine according to any one of the preceding Claims, characterised in that an annular ring (52) is provided for centring the stator, the centring ring being gripped axially between an annular support surface (56) formed in the other part (18) of the casing (14) and the other radial and annular end face (32) of the stator (12).

9. An alternator, especially for a motor vehicle, characterised in that it is made in accordance with any one of the preceding Claims.
